# EUROPEAN PATENT APPLICATION

(11) **EP 2 838 013 A1**
(43) Date of publication of application: **18.02.2015**
(21) Application number: 13180449.4
(22) Date of filing: 14.08.2013
(51) Int. Cl.: G06F 9/44, G06F 9/45

(54) **Improved state space analysis using partial descriptions**

(71) Applicant: Bitreactive AS, 7030 Trondheim (NO)
(72) Inventor: Krämer, Frank Alexander, 7030 Trondheim (NO)
(74) Representative: Finnie, Peter John

(57) **Abstract**

A computer implemented method comprising: receiving a system composition comprising an arrangement of one or more complete software building blocks, each of the complete software building blocks having a corresponding partial software building block; determining the reachable steps of each of the partial software building blocks; and combining all the reachable steps of each of the partial software building blocks into a single composition of steps.

## Description

### FIELD OF THE TECHNOLOGY

The present disclosure relates to a method of creating software applications for use in electronic devices capable of running software applications.

### BACKGROUND

Software development kits (SDKs) are tools that can aid the development of software applications. Rather than requiring a developer to write all the code for a software application, an SDK can assist development by providing a collection of pre-made software building blocks that can be used to build up a complete software application.

These software building blocks are entities that describe partial programs for solving specific problems. For example, there may be a building block that can encrypt information, or a building block that can process certain sensor input, or a building block that acts as a timer. Building blocks can be connected with other building blocks to describe a multi-functioned software application that can perform actions in response to different events and logic. Building blocks may themselves be made up of other building blocks. By arranging and connecting building blocks, a developer can construct complex software from a high level.

Some SDKs can convert the high level system specification of connected software building blocks into a complete set of code. However, such a conversion can be computationally expensive.

Improvements in SDKs and other tools for aiding software development are desirable.

### SUMMARY

According to one aspect of the present invention, a computer implemented method for generating code, the method comprising: receiving a system composition comprising an arrangement of one or more complete software building blocks, each of the complete software building blocks having a corresponding partial software building block; determining the reachable steps of each of the partial software building blocks; and combining all the reachable steps of each of the partial software building blocks into a single composition of steps.

As evaluating reachable steps of a system composition is a computationally expensive task, using partial blocks may reduce the complexity of the reachability analysis considerably and so may be advantageous.

Performing a reachability analysis on individual partial building blocks rather than the system composition as a whole may provide a number of advantages. Typically, adding more blocks to a system results in an exponential increase in complexity of state space calculations, sometimes referred to as a state space explosion. However, by splitting the task into component blocks, and performing an analysis on the corresponding partial blocks, the size of state spaces for each reachability analysis remains roughly the same and unaffected by the introduction of further blocks, as each block analysis is performed in isolation. When the reachable steps of all the blocks are combined, efficient tree traversal algorithms may be used for the combination.

Performing the reachability analysis on the partial blocks in isolation also allows for efficient parallelisation of the task, allowing for potentially faster processing of the method. Furthermore, although the reachability analysis of a system as a whole may be very specific and bespoke, the reachability analysis of smaller partial blocks may have been predetermined and so those results may be used instead of performing the full analysis.

In some example embodiments, the determining the reachable steps comprises a state space analysis.

In some example embodiments, the method further comprises determining a set of execution steps for each of the partial software building blocks prior to the determining the reachable steps.

In some example embodiments, a partial software building block comprises a description of external behaviour of its corresponding complete software building block and descriptions of external behaviours of any inner blocks contained within the corresponding complete software building block.

In some example embodiments, the external behaviour comprises the inputs and outputs of the corresponding complete software building block.

In some example embodiments, the method further comprises generating executable code from the single composition of steps.

In some example embodiments, the number of determined reachable steps of each of the partial software building blocks is less than the number of steps of each of the partial software building blocks.

In some example embodiments, the number of steps in each partial software building block is less than the number of steps in each corresponding complete software building block.

In some example embodiments, the combining of all the reachable steps is performed at a compositional step builder.

In some example embodiments, the software building blocks are expressed by Unified Modelling Language 'UML' diagrams.

In some example embodiments, when a software building block comprises a plurality of inner software building blocks: the determining the reachable steps of each partial building block comprises determining the reachable steps of partial building blocks corresponding to each of the plurality of inner software building blocks. In this way, if a software building block contains a number of inner software building blocks, the reachability analysis is performed on the inner blocks as well, thereby ensuring that all reachable execution steps are found for code generation.

In some example embodiments, inner software building blocks are complete software building blocks contained within a software building block.

In some example embodiments, the method is performed recursively on each software building block contained within a software building block.

According to another aspect of the present invention, a system comprising one or more processors, and memory comprising instructions which when executed by the one or more processors causes the system to carry out any of the methods described above.

### BRIEF DESCRIPTION OF DRAWINGS

Examples of the present proposed approach will now be described in detail with reference to the accompanying drawings, in which:
**Figure 1** is a block diagram showing the steps of generating code from a system specification;
**Figure 2** is a block diagram showing the steps of generation code from a system specification using space state analysis;
**Figure 3** is a block diagram showing the steps of generating code from a system specification in accordance with the proposed solution;
**Figure 4** is a block diagram showing an example system composition as viewed by a user;
**Figure 5** is a block diagram illustrating the UML activity of an example software building block;
**Figure 6** is a state machine representing the external interface of an example software building block;
**Figure 7** is a tree of building blocks within an example system description;
**Figure 8** is a block diagram illustrating the flow of example execution steps through an example system composition; and
**Figure 9** is a block diagram illustrating the flow of example execution steps through the internals of an example software building block.

### DETAILED DESCRIPTION

For simplicity and clarity of illustration, reference numerals may be repeated among the figures to indicate corresponding or analogous elements. Numerous details are set forth to provide an understanding of the examples described herein. The examples may be practiced without these details. In other instances, well-known methods, procedures, and components are not described in detail to avoid obscuring the examples described. The description is not to be considered as limited to the scope of the examples described herein.

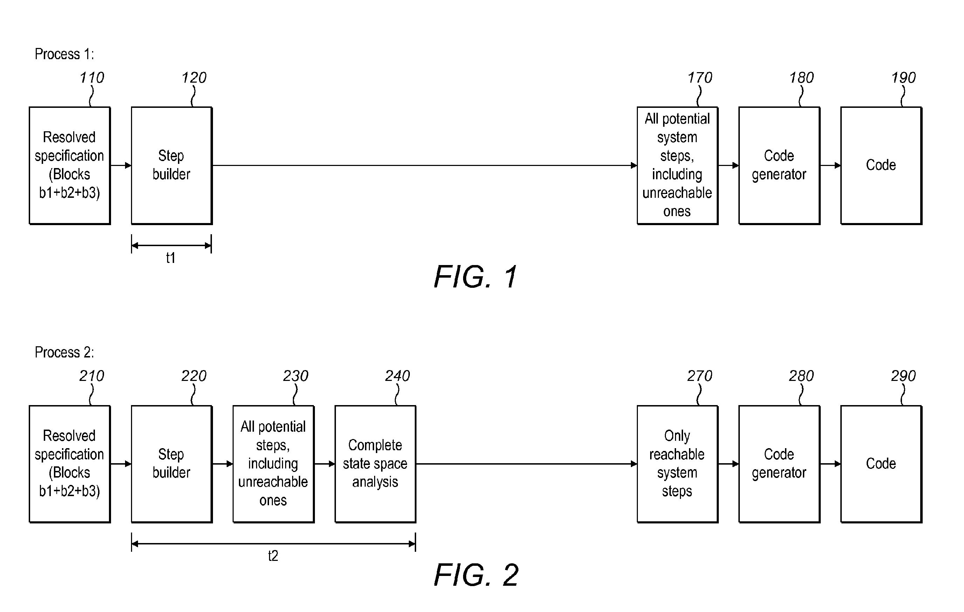

Figure 1 is a simplified block diagram showing the steps of generating code from a system specification. At step 110, a resolved specification is provided as an input. This specification may be a composition of software building blocks that the user has arranged to form a complete system specification of the software they wish to create. In this example, the specification comprises three software building blocks b1, b2 and b3 which are arranged in a hierarchy within the specification. Although a user may have constructed the system composition from three blocks, the resolved system composition would also include descriptions of any elements, logic and blocks contained within these three user-accessible blocks.

Each software building block includes a description of the function it performs in the form of a UML (Unified Modelling Language) activity, for example. The software building blocks may also include information of an enclosing contract, providing a specification of the inputs and outputs of the block and requirements that need to be met, such as pre-conditions, post-conditions, synchronisation constraints, parameter compatibility requirements and non-functional features.

To convert the input specification into a single code module, a step builder 120 may be used to transform UML activities of the building blocks into a sequential format consisting of execution steps. These execution steps may also be referred to as run-to-completion steps. An execution step may be triggered by certain events and carries the system from one stable state to another state, where it will await the next event.

In the example shown in Figure 1, the step builder 120 generates the execution steps by only analysing the syntax of the activity, and, as a result, some of the steps generated may not be reachable when the application is executed as a whole. Indeed, in practice, many or most of the steps generated would not be reachable. Although there are several combinations of behaviour that can be reached syntactically, the arrangement of the software building blocks in the specification may mean that some of these combinations may never actually be reached. Therefore, the result of the step builder 120 is a set of all potential system steps, including steps unreachable by the software as a whole 170.

The execution steps may be entered into a code generator 180 that converts the sequence of steps into a language-specific set of code 190. However, as the code generation is based on a set of steps including unreachable ones, the code generated may contain lines that are never used, therefore making the code unnecessarily large.

Code with large footprints are typically undesirable, as they require more memory to store, more bandwidth to transmit, and more processing power for operating on.

Figure 2 is a block diagram showing the steps of generating optimised code from a system specification by utilising state space analysis.

A resolved specification is received as input at step 210, and a step builder 220 determines all the possible steps that are syntactically possible 230 given the input specification.

Unlike the process shown in Figure 1, the process shown in Figure 2 includes a state space analysis step 240. This is provided to filter out any steps that may never happen during the execution of the application. The state space analysis 240 may execute all possible combinations and permutations of behaviours of the system, thereby finding out which steps are actually reachable and which ones are unreachable. This process may be referred to as 'model checking', and is often used in finite-state systems.

Once the state space analysis step 240 has evaluated the reachable steps of the system 270, this subset of steps is provided to the code generator 280 which generates a code with a smaller footprint than if generated without the state space analysis step.

As the state space analysis step 240 described involves an exhaustive search of all the behaviours of the system, this step may be computationally expensive. As the computational complexity of an exhaustive state space analysis increases rapidly, or even exponentially, with the number of possible steps in the system specification, the analysis may an inhibitively long time to perform and utilise substantial computational resource, which would be undesirable for an SDK.

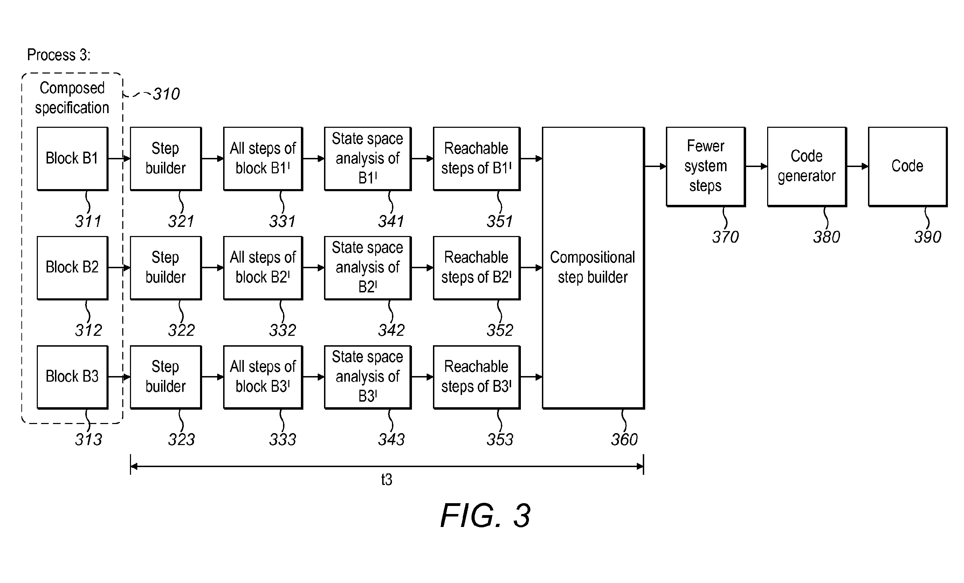

Figure 3 is a block diagram showing the steps of efficiently generating optimised code from a system specification in accordance with an example embodiment of the proposed solution.

At a first step 310, rather than operating on a resolved specification as a whole, the proposed solution operates on separate blocks of the system specification. In this example the composed system specification comprises three building blocks B1 311, B2 312 and B3 313.

Each of the three building blocks B1 311, B2 312 and B3 313 has a full description of their inner workings, such as a description of the internal logic used within the blocks and descriptions of any smaller blocks contained within and their respective inner details.

Associated with each of the three building blocks is a corresponding partial software building block. The partial software building block may define the external behaviour of its corresponding complete software building block. Where a complete software building block is made up of inner building blocks, the partial software building block may also define the externally visible behaviour of these inner blocks, but without providing full descriptions of their respective inner details. For example, a partial building block may define the inputs and outputs of a corresponding complete building block and the flows between inputs and outputs that are possible for the block and their inner details.

In example embodiments where UML is used, the partial building blocks may comprise an enclosing contract providing a specification of the inputs and outputs of the block and constraints that need to be met.

The embodiment described may find corresponding partial building blocks B1', B2' and B3' for each of the complete building blocks B1 311, B2 312, and B3 313 respectively. In some example embodiments for each complete software building block, the SDK has a corresponding software building block stored for access. In other example embodiments a partial building block is not stored, but instead is extracted from the corresponding complete software building block when required. This extraction may comprise extracting an existing element of the complete software building block, such as an enclosing contract.

A first step builder 321 finds all the steps 331 of partial building block B1' 311 in isolation, without considering the interaction with other building blocks. Similarly, a second 322 and third 323 step builder finds all the steps (332 and 333) of partial building blocks B2' and B3' respectively. These three step builder may operate in parallel, or there may be a single step builder that operates on each building block individually, for example. The total number of steps for each of partial building blocks B1', " B2' and B3' will typically be less than the total number of steps for each of the corresponding complete building blocks B1 311, B2 312, and B3 313.

A state space analysis is then performed on each of the sets of steps determined for each of the building blocks separately. The state space analysis of B1' 341 takes all the steps of partial block B1' and determines the reachable steps of the partial block. Similarly, the state space analysis of B2' 342 and B3' 343 takes all the steps of blocks B2' 342 and B3' 343 and determines the reachable steps 352 and 353 respectively.

Once the reachable steps of each of the partial blocks B1', B2' and B3' have been determined (steps 351, 352 and 353 respectively), these reachable steps are combined at a compositional step builder 360. Although the state space analysis has been performed on partial building blocks in isolation, the compositional step builder constructs a full set of reachable system steps from the reachable steps of the individual partial building blocks analysed. The final number of steps 370 that the compositional step builder outputs should be substantially less than the number of steps found without reachability analysis (box 170 in Figure 1). While the steps output 370 by the compositional step builder 360 may still contain some unreachable steps, so may be greater than the number of steps 270 using the exhaustive method shown in Figure 2, the amount of time taken and computational resources required for the proposed solution should be less than with the exhaustive search of Figure 2.

The proposed solution takes the reachable system steps 370 from the compositional step builder and at the code generator 380, it generates all the code for all of the steps output 370.

The example used in Figure 3 involves a composed system specification 310 made up of three complete software building block. When these blocks are arranged in a hierarchy and when more blocks are involved, the advantages of the proposed solution are more readily apparent.

The composed specification 310 may be made up of a top-most building block B1 311, where that top-most building block 311 is itself made up of two smaller building blocks B2 312 and B3 313. The proposed solution may first determine the steps of a corresponding partial building block B1' in isolation. As a partial building block does not take into account the detailed inner workings of the complete building block, the step analysis of partial building block B1', may not take into account the inner blocks B2 and B3 at first.

The state space analysis 341 of the partial block B1' may reveal that certain steps are not reachable because certain outputs of the partial block B1' are not connected, or certain states are not reachable, for example. Determining early on in the overall analysis that these top-level steps are unreachable may save on computational power.

The analysis of inner blocks B2 312 and B3 313 may be performed after the analysis of the parent block B1 311, but as the block analyses can be carried out in isolation of each other, the separate analysis threads of the various blocks can be performed in parallel. It is at the compositional step builder 360 that the steps of the inner blocks are incorporated with their parent blocks. For example, the compositional step builder 360 may work through the hierarchy, replacing all separate block steps until all system steps are fully developed.

Blocks B2 312 and B3 313 may themselves comprise of smaller blocks, and the same recursive algorithm may be performed on these smaller blocks. The analysis of partial blocks B2' and B3' may determine the reachability analysis of the blocks as a whole, and at the compositional step builder 360 the steps related to the smaller blocks would be incorporated into steps found for B2' and B3'.

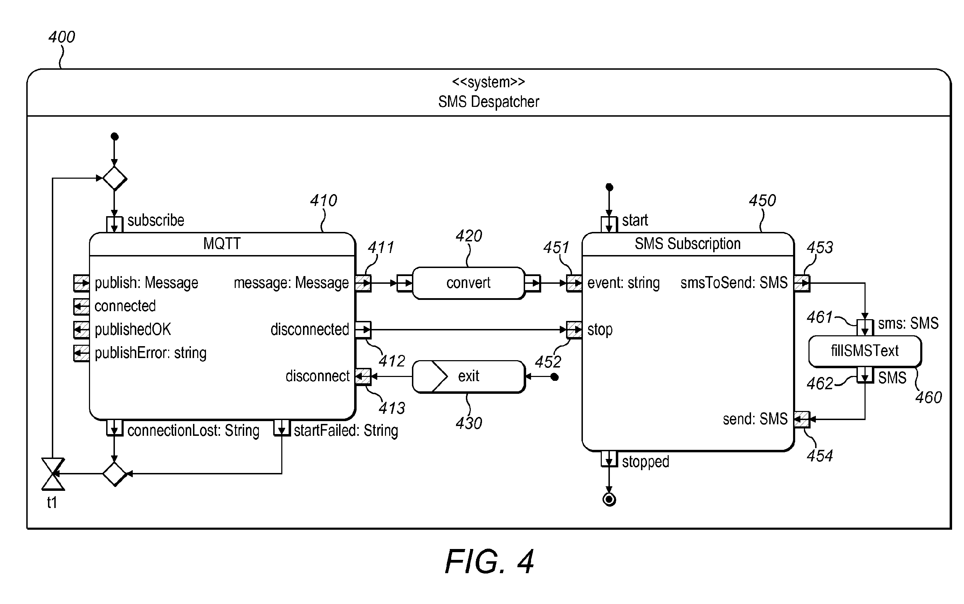

Figure 4 shows an example system composition 400 to illustrate how an example embodiment of the proposed solution may operate on a system composition.

The example system composition shown is the design for an SMS (short message service) despatcher 400. This system composition 400 may have been designed by a developer using an SDK by arranging elements and software building blocks together. In this example, the SMS despatcher 400 comprises two top-level software building blocks, an MQTT module (message queue telemetry transport) 410 and an SMS Subscription module 450.

An MQTT module 410 provides a lightweight messaging protocol standard that a developer may wish to use for managing SMS Subscriptions. As the MQTT building block 410 is provided in the SDK, the developer has the freedom to decide what protocols to use in conjunction with the SMS Subscription module 450 by selecting building blocks that would be appropriate for the task at hand. The MQTT 410 and SMS Subscription 450 building blocks may have been built into the SDK, or may have been loaded from a third party developer, or may have been developed by the user, for example.

The developer may add additional elements to the system composition to add functionality and to allow the two blocks to work together. The 'exit' 430 reception event may be connected to the disconnect pin 413 of the MQTT building block 410 to provide an exit mechanism for the system. A 'convert' operation 420 may be connected between the 'message: Message' pin 411 of MQTT block 410 and the 'event: string' pin 451 of the SMS Subscription block 450. A 'fillSMSText' block 460 has been added between pins 'smsToSend: SMS' 453 and 'send: SMS' 462 of the SMS Subscription block 450.

As a result of the arrangement of software building blocks indicated in the SMS despatcher system, when the MQTT block 410 registers an incoming command message, it is output via the 'message: Message' pin 411 and converted to an event ID at convert block 420 before being forwarded to the 'SMS Subscription' block 450 at pin 'event: String' 451, which proceeds to arrange the delivery of the SMS message.

By providing generic software building blocks such as the MQTT 410 and SMS Subscription blocks 450 in an SDK, a user is able to design fully functioning systems efficiently. Although each building block may have complex and detailed inner workings, the user need only be aware of the input and output terminals of each block, and how they can be linked to interact with one another.

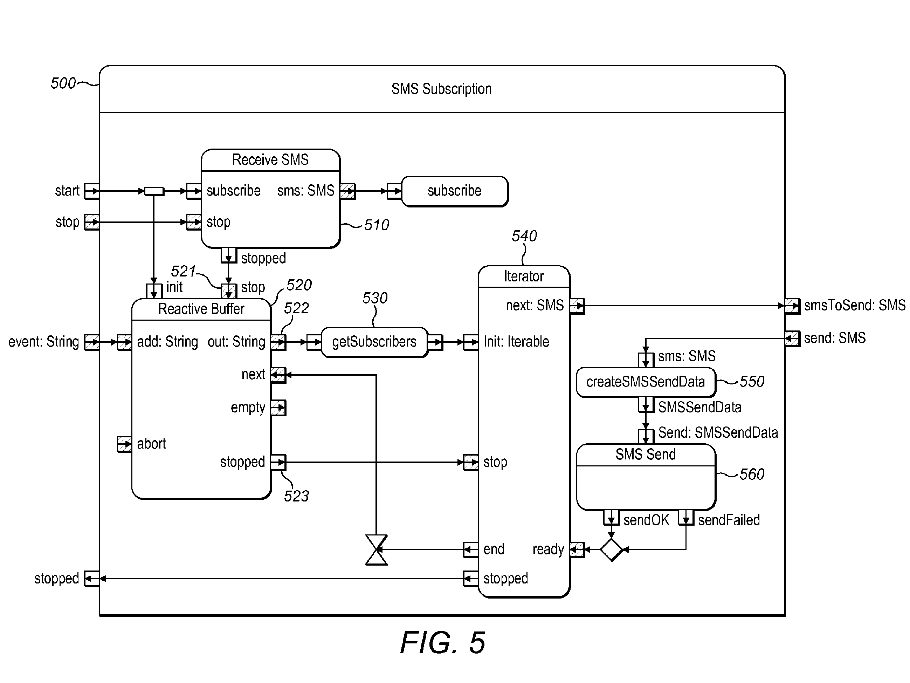

Figure 5 shows the internals of the 'SMS Subscription' software building block 500. The 'SMS Subscription' block 400 displayed to the user in Figure 4 offers the user five input pins and two output pins to interact with, but does not necessarily provide details of the inner workings of that block. The 'SMS Subscription' block 500 shows the same five input pins and two output pins, but also shows that that this block comprises four building blocks 'Receive SMS' 510, 'Reactive Buffer' 520, 'Iterator' 540, and SMS send '560'. The 'SMS Subscription' block 500 also contains a number of elements such as 'getSubscribers' 530 and `createSMSSendData' 550, and in some embodiments these elements are also referred to as software building blocks.

The arrangement of the internals of the 'SMS Subscription' block 500 shows how the block allows new users to subscribe via the 'Receive SMS' block 510, and sends out messages to subscribers at the 'SMS Send' 560 block. The 'Iterator' block 540 is provided so that the system can send an SMS to each user, one at a time, while the 'Reactive Buffer' block 520 buffers events as they arrive while the rest of the system is busy sending earlier messages in the queue.

The inner blocks may themselves have a number of input and output pins. For example, the 'Reactive Buffer' 520 comprises five input pins (e.g. 'stop' 521) and three output pins (e.g. 'out' 522 and 'stopped' 523), and will have its own internal logic not displayed when analysing the 'SMS Subscription' block 500.

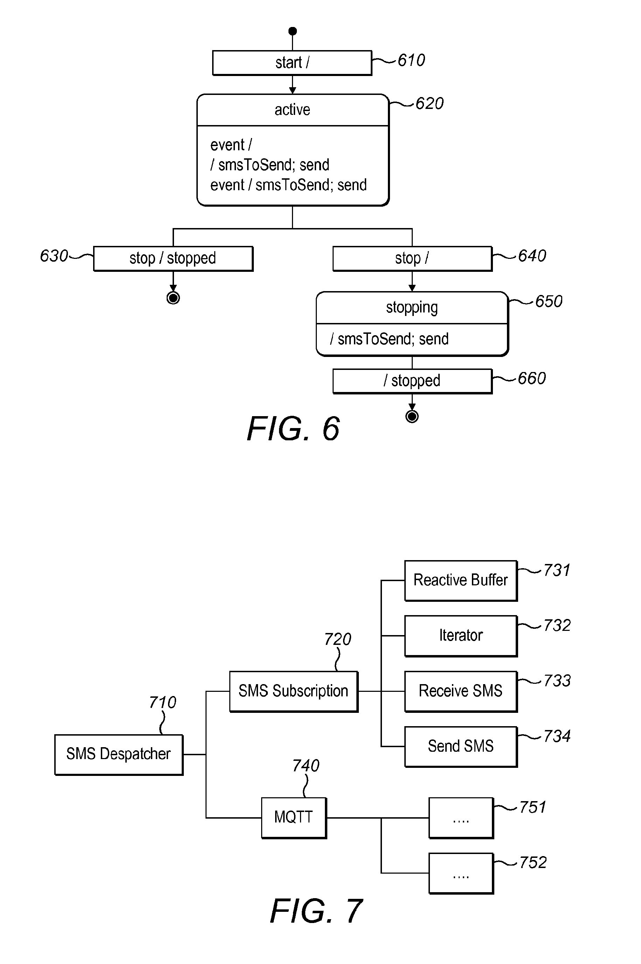

Figure 6 shows an example state machine for the 'SMS Subscription' block 450 of Figure 4. This state machine indicates the externally visable inputs and outputs of the block, the states the block can be in and the transitions between these states. This state machine provides information of the core details of the block without displaying all of the internal logic or details.

The 'start' transition 610 indicates that triggering the pin 'start' when the 'SMS Subscription' block 450 is in an uninitialised state will cause the block to enter an 'active' state 620. While in this 'active' state 620, three different self-transitions may take place. For example, an input string may be received at the 'event' pin 451, denoted by transition 'event /'. Alternatively, the SMS Subscription may output an SMS to send, which has to be responded to by the surrounding block by an immediate input via 'send'. Finally, it may also happen that all of the three mentioned input and outputs may be invoked in the same step, indicated by transition 'event / smsToSend; send'. Self-transitions like those triggered by the 'event' pin 451 while in an active state 620 leaves the state in the same state. While in the active state 620, receiving an input at the 'stop' pin 452 will either cause the 'stopped' output pin to be immediately triggered, causing the block to change to a stopped state as indicated by transition 630, or the block may enter a 'stopping' state 650, as indicated by transition 640. From this 'stopping' state 650, self-transitions for sending SMS' may continue or an output of the 'stopped' pin may transition 660 the state to a stopped state.

State machines, such as that shown in Figure 6, can be useful for efficiently determining the reachable steps of a complete software block. For example, the state machine shows that while the 'SMS Subscription' block 450 is in a 'stopping' state 650, if it receives an input at the 'event' pin 451, nothing will happen, as the 'event' pin 451 can only trigger events while in the 'active' state 620.

Each of the transitions mark a legal passing of data flows within one step via one or more parameter nodes. This means that parameter passings can be modelled based on the state machine. Therefore, the state machine may be referred to as a contract, or contract state machine, and its transitions may be referred to as contract transitions.

Figure 7 illustrates the hierarchy of the SMS Despatcher system composition. At the top-most level is the SMS Despatcher block 710. Within this SMS Despatcher block 710 are two main building blocks, the SMS Subscription block 720 and the MQTT block 740. Within the SMS Subscription block 720, are a number of smaller blocks, like the 'Reactive Buffer' 731, 'Iterator' 732, 'Receive SMS' 733, and 'Send SMS' 734 blocks. The MQTT block 744 may have its own sub-blocks 751 and 752 contained within it. Using this hierarchy, the compositional system builder 360 of Figure 3 may be able to build the steps of the individual partial blocks into where they are placed in the system steps as a whole.

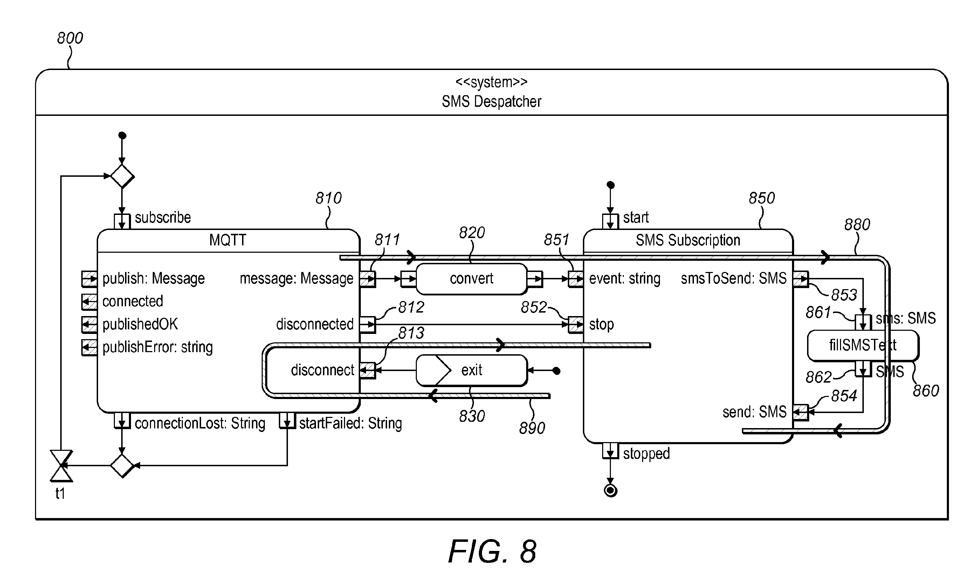

Examples of execution steps through the SMS Despatcher system 800 are illustrated in Figure 8. An execution step can be considered as a flow of connected elements that are all executed within the same run-to-completion step. In other words, an execution step can be the flow of data as the system transitions from one stable state to another stable state.

Example execution step 880 is executed when a new command message arrives. The step 880 begins within the MQTT block, and causing the MQTT to output a message at the 'message' pin 811. This message is converted 820 to a string and is input at the 'event' pin 851 of the 'SMS Subscription' block 850. The 'SMS Subscription' block 850 then sends an SMS out of the 'smsToSend' pin 853 where it is received at the SMS pin 861 of the 'fillSMSText' block 860. At the 'fillSMSText' block 860, the SMS is populated and then sent via the SMS pin 862 to the 'send' input pin 850 of the 'SMS Subscription' block 850 where the SMS is sent. Even though this flow 880 passes through multiple blocks, it is all part of a single run-to-completion step.

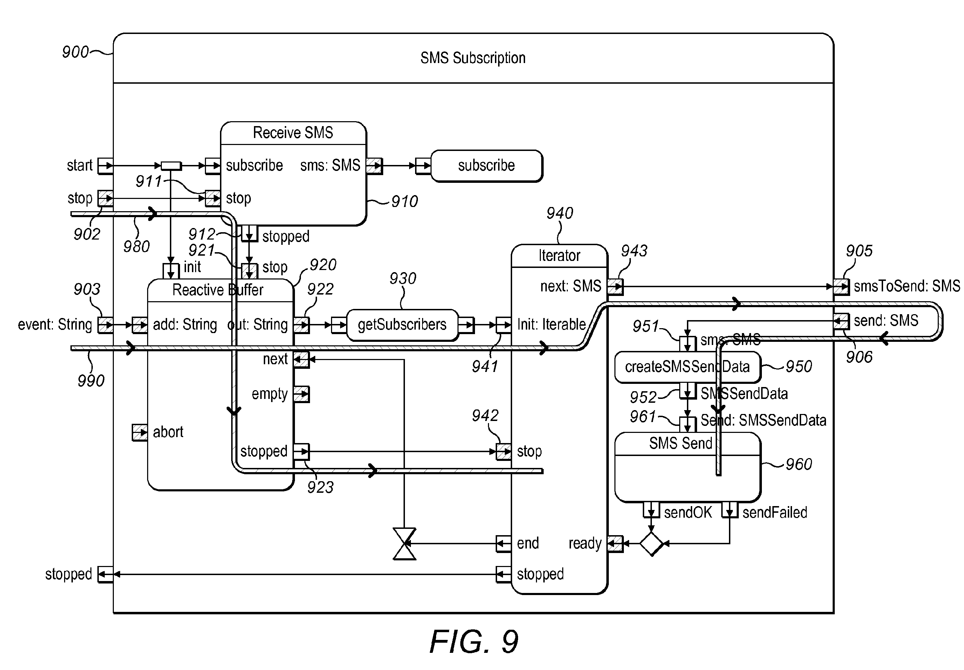

While Figure 8 shows the flow of execution step 880 through the main blocks of the SMS despatcher system block 800. Figure 9 indicates the flow of the same execution step 990 through the internals of the SMS Subscription block 900. On receiving the message as a string at the 'event' pin 903, the string enters the 'add' pin of the 'Reactive Buffer' block 920 before being output the 'out' pin 922. This message then passes through the 'getSubsribers' block 930 into the 'init' pin 941 of the 'iterator' block 940. The 'next' pin 943 outputs the SMS to the 'smsToSend' pin 905, and the SMS Subscription block subsequently receives a completed SMS at the 'send' pin 906. This SMS enter the 'sms' pin 951 of the 'createSMSSendData' 950 block and outputs 'SMSSendData' from pin 952 to the 'send' pin 961 of the 'SMS Send' block 960, where the SMS is sent.

Each execution step assumes certain states and certain inputs for each block that the flow passes through. For example, if the Iterator 940 was in a stopped state, then the execution flow 990 would stop at that point and would not subsequently reach the SMS send block. Therefore, the scenario where the Iterator 940 is in a stopped state would be a separate execution step to when the Iterator is in an active state.

Execution flow 890 provides an execution flow that, although syntactically consistent, would not be reachable by the system as a whole. This execution flow shows the exit of the system triggered by the 'exit' block 830, which enters the 'disconnect' pin 813 of the MQTT block 810, exiting the block via the 'disconnected' pin 812 before entering the SMS Subscription block at the 'stop' pin. Figure 9 shows what is happening within the SMS Subscription block 900 when the 'stop' pin 902 is activated in this execution flow 980. While the 'Receive SMS' block is in an active state, the 'stop' pin 911 is triggered, causing the 'stopped' pin 912 to activate the 'stop' pin 921 of the Reactive Buffer block 920, causing the block 920 to enter a 'stopped' state. This triggers the 'stopped' pin 923 of the Reactive Buffer block 920 and subsequently triggers the 'stop' pin 942 of the Iterator block 940. However, this this execution would not be reachable during runtime of the whole system. The Iterator block 940 can only be in a state 'stopped' if it has previously been put into a stopped state; however, the 'stop' pin 942 can only be triggered once due to the way the Iterator block 940 is connected within the SMS Subscription block 900, and therefore this execution step is unreachable.

In the exhaustive search method shown in Figure 2, the complete system is simulated exhaustively, step by step, to determine which execution steps are reachable and which are not in a reachability analysis. In the example system shown there are 124 reachable combinations of states, but this number increases significantly for systems with more blocks.

If the reachability analysis was performed on a complete, resolved system specification, i.e. one where every block and element is considered, the number of permutations and combinations of flows would increase exponentially with the number of blocks in the system. By taking each block in isolation and performing a reachability analysis on the corresponding individual partial blocks, there is a much smaller state space to operate on. For example, from the partial block for the SMS despatcher, there would only be 12 possible states. This is substantially smaller than the number of possible states if the SMS despatcher was considered with all of its internal blocks.

When determining partial execution steps in accordance with the proposed solution, the process is similar to a traditional approach, but whenever a block invokes an inner block, the action of the inner block is represented only by the corresponding transition of the contract state machine, but not its actual behaviour.

There are a number of algorithms that the compositional step builder could use to combine the reachable steps together. The algorithm may take the reachable, partial execution steps from a topmost building block, SMS despatcher, and then consider each of the inner blocks, MQTT and SMS Subscription one at a time, replacing the transitions of the contract state machines of the inner blocks by the corresponding inner (partial) execution step. As there may be more than one execution step represented by a contract transition, this may involve multiplying execution steps.

Once all the contract transitions of all blocks in a set of execution steps are replaced at one level (for example the MQTT and SMS Subscription blocks), the algorithm may continue by replacing the contract transitions of the inner blocks another level down, until all the contract transitions are replaced. This algorithm describes a breadth-first, level-order traversal approach to traversing the hierarchy (shown in illustrated in Figure 7, but other approaches may be used, such as one of many depth-first traversals available.

The proposed solution provides a method of performing state space analysis on a composed system specification that not only removes redundancies from the output (through reachability analysis), but does so in a computationally efficient way (by separating out the task into the component blocks and performing analysis on corresponding partial blocks).

It is to be understood that the present disclosure includes permutations of combinations of the optional features set out in the embodiments described above. In particular, it is to be understood that the features set out in the appended dependent claims are disclosed in combination with any other relevant independent claims that may be provided, and that this disclosure is not limited to only the combination of the features of those dependent claims with the independent claim from which they originally depend.

## Claims

1. A computer implemented method comprising:
receiving a system composition comprising an arrangement of one or more complete software building blocks, each of the complete software building blocks having a corresponding partial software building block;
determining the reachable steps of each of the partial software building blocks; and
combining all the reachable steps of each of the partial software building blocks into a single composition of steps.

2. The computer implemented method of claim 1, wherein the determining the reachable steps comprises a state space analysis.

3. The computer implemented method of claim 1 or 2, further comprising determining a set of execution steps for each of the partial software building blocks prior to the determining the reachable steps.

4. The computer implemented method of any preceding claim, wherein a partial software building block comprises a description of external behaviour of its corresponding complete software building block, and descriptions of external behaviours of any inner blocks contained within the corresponding complete software building block.

5. The computer implemented method of claim 4, wherein the external behaviour comprises the inputs and outputs of the corresponding complete software building block.

6. The computer implemented method of any preceding claim, wherein the partial software building block comprises a state machine

7. The computer implemented method of any preceding claim, further comprising generating executable code from the single composition of steps.

8. The computer implemented method of any preceding claim, wherein the number of determined reachable steps of each of the partial software building blocks is less than the number of steps of each of the partial software building blocks.

9. The computer implemented method of any preceding claim, wherein the number of steps in each partial software building block is less than the number of steps in each corresponding complete software building block.

10. The computer implemented method of any preceding claim, wherein the combining of all the reachable steps is performed at a compositional step builder.

11. The computer implemented method of any preceding claim, wherein the complete software building blocks and partial software building blocks are expressed by Unified Modelling Language 'UML' diagrams.

12. The computer implemented method of any preceding claim, wherein when a complete software building block comprises a plurality of inner software building blocks:
the determining the reachable steps of each partial building block comprises determining the reachable steps of partial building blocks corresponding to each of the plurality of inner software building blocks.

13. The computer implemented method of claim 12, wherein inner software building blocks are complete software building blocks contained within a complete software building block.

14. The computer implemented method of claim 12 or 13, wherein the method is performed recursively on each software building block contained within a complete software building block.

15. A system comprising one or more processors, and memory comprising instructions which when executed by the one or more processors causes the system to carry out the method of claims 1 to 14.
